# FASCICULE DE BREVET EUROPEEN

(11) **EP 2 010 400 B1**
(45) Date de publication et mention de la délivrance du brevet: **09.11.2011**
(21) Numéro de dépôt: 07731250.2
(22) Date de dépôt: 04.04.2007
(51) Int. Cl.: B60B 33/02

(54) **DISPOSITIF DE BLOCAGE/LIBERATION D'UNE CHAPE DE ROUE ORIENTABLE ET CHARIOT BRANCARD EQUIPE D'UN TEL DISPOSITIF**
SPERR-/FREIGABEVORRICHTUNG FÜR EINE VERSTELLBARE RADGABEL UND MIT DER VORRICHTUNG AUSGESTATTETE KRANKENTRAGE
BLOCKING/RELEASE DEVICE FOR AN ADJUSTABLE CLEVIS WHEEL AND TROLLEY STRETCHER EQUIPPED WITH THE DEVICE

(30) Priorité: 24.04.2006 FR 0603615
(43) Date de publication de la demande: 07.01.2009
(73) Titulaire: Contact Securite, 37200 Tours Technopole (FR)
(72) Inventeur: ZARKA, Michel, F-37230 Fondettes (FR)
(74) Mandataire: Michardière, Bernard
(86) Numéro de dépôt international: PCT/FR2007/000574
(87) Numéro de publication internationale: WO 2007/125183

(56) Documents cités:
- DE-A1- 19 514 180
- DE-A1- 19 530 986
- DE-A1-102004 024 178
- US-A- 4 439 879
- US-A- 4 759 098
- US-A1- 2004 128 766

## Description

La présente invention est relative à un dispositif de blocage/libération d'une chape de roue orientable dans laquelle est installée une roue, d'axe sensiblement horizontal, la chape étant montée de manière pivotante autour d'un axe sensiblement vertical à l'extrémité inférieure d'une jambe participant au support d'un appareil, le dispositif comportant un moyen d'indexation permettant de bloquer la chape par rapport à la jambe selon une orientation prédéfinie.

Les chariots comprenant de telles chapes de roues orientables ont de nombreuses applications. Les roues avant et/ou arrière de certains chariots sont montées sur des supports pivotants de manière à pouvoir s'orienter selon le sens de déplacement du chariot. Toutefois, pour certains types de manoeuvre, il est préférable que cette possibilité de pivotement soit supprimée.

En particulier, dans le cas de chariots brancards, il est souhaitable de pouvoir bloquer les chapes de roues arrière orientables lorsque l'on doit insérer le chariot à l'intérieur d'un véhicule. En effet, lors de cette opération, l'opérateur exerce sur les poignées arrière du chariot une poussée vers le bas afin de décoller les roues avant du sol et de permettre à des roulettes, situées à l'avant du chariot, de s'engager sur le plancher du véhicule.

Cette opération est délicate et les chapes de roues arrière doivent être de préférence bloquées. De plus, l'opérateur, dont les mains tiennent les poignées du chariot, est gêné pour actionner les dispositifs de blocage existants. US 20040128766 décrit le préambule de la revendication 1.

L'invention a pour but, surtout, de proposer un dispositif de blocage/libération de chape de roue orientable permettant de bloquer ou libérer la chape de roue par une commande facilement accessible à l'utilisateur, en particulier lors de la phase de chargement d'un chariot brancard dans un véhicule.

Selon l'invention un dispositif du genre défini précédemment est **caractérisé en ce que** le moyen d'indexation comprend une commande de blocage montée sur la jambe de manière à pouvoir pivoter selon un axe sensiblement horizontal, la commande de blocage comprenant une première extrémité formant levier et une seconde extrémité pourvue d'un doigt coopérant avec un bloqueur solidaire de la chape, un moyen de positionnement assurant le maintien de la commande de blocage dans une première et une seconde positions respectivement activant et désactivant le moyen d'indexation.

Le bloqueur peut comporter une gorge, destinée à accueillir le doigt, encadrée par des pans inclinés.

Le moyen de positionnement peut comprendre une lame élastique solidaire de la jambe coopérant avec au moins une surface plane appartenant à la commande de blocage et dont la normale est orthogonale à l'axe de rotation de la commande de blocage.

Dans le cas où les deux jambes arrière d'un chariot sont équipées d'un dispositif selon l'invention, une pédale peut relier les commandes des deux dispositifs.

De préférence, lorsque la chape est bloquée, la ligne moyenne de la jambe, à l'extrémité inférieure de la jambe, passe derrière l'axe de la roue par rapport au sens de déplacement du chariot.

D'autres caractéristiques et avantages de l'invention apparaîtront dans la description qui suit d'un mode de réalisation avec référence aux dessins annexés mais qui n'a aucun caractère limitatif.

Sur ces dessins :
Fig. 1 est une vue en perspective d'un chariot selon l'invention.
Fig. 2 est une vue en perspective à plus grande échelle de la partie inférieure arrière d'un chariot avec un dispositif selon l'invention.
Fig. 3 est une vue en élévation latérale et partie coupée d'une extrémité de jambe comportant le dispositif de Fig. 2, la chape de roue étant libre en rotation.
Fig. 4 est une vue similaire à Fig. 3, la chape ayant pivoté de 180° par rapport à la jambe et étant bloquée en rotation.
Fig. 5 est une vue de dessus du dispositif de Fig. 3.
Fig. 6 est une vue arrière d'une variante de chariot avec jambes arrière arquées.
Fig. 7 est une vue schématique présentant l'insertion d'un chariot selon l'invention dans une ambulance.
Fig. 8 est une vue schématique partielle à plus grande échelle de la commande en position de blocage.
Fig. 9 est une vue similaire à Fig. 8 en position débloquée.
Fig. 10 est une vue schématique de dessus du bloqueur, la chape ayant pivoté de quelques degrés, et la nervure active se trouvant en position permettant le blocage.
Fig. 11 est une vue schématique de dessus de la nervure active en prise dans le bloqueur, la chape étant bloquée.
Fig. 12 est une vue schématique de dessus de la nervure active, en position de déblocage, dégagée du bloqueur, la chape étant débloquée, et enfin
Fig. 13 est une vue schématique de dessus de la nervure active, en position de déblocage, et du bloqueur, la chape ayant pivoté de 180°.

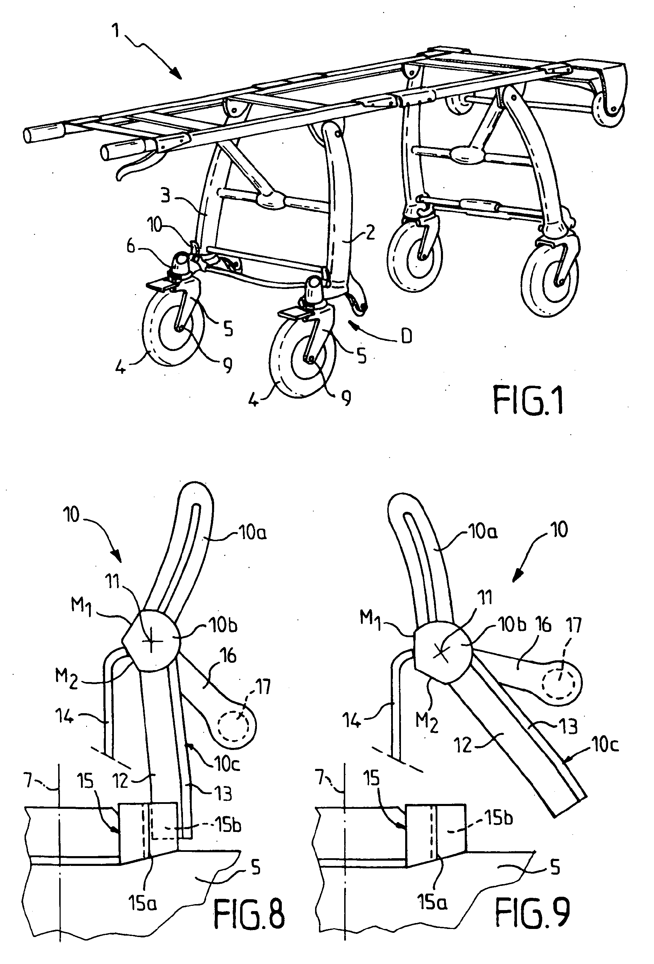

En se référant à Fig. 1, on peut voir un dispositif D selon l'invention mis en place aux extrémités inférieures des jambes arrière 2 et 3 d'un chariot brancard 1. Des roues 4 montées rotatives autour d'axes horizontaux dans des chapes 5 sont également visibles.

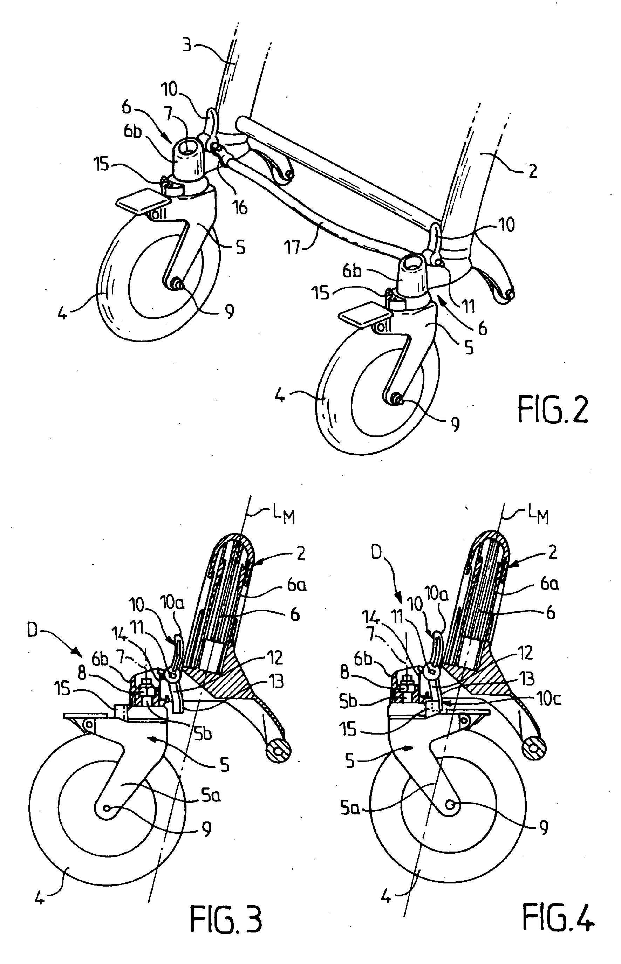

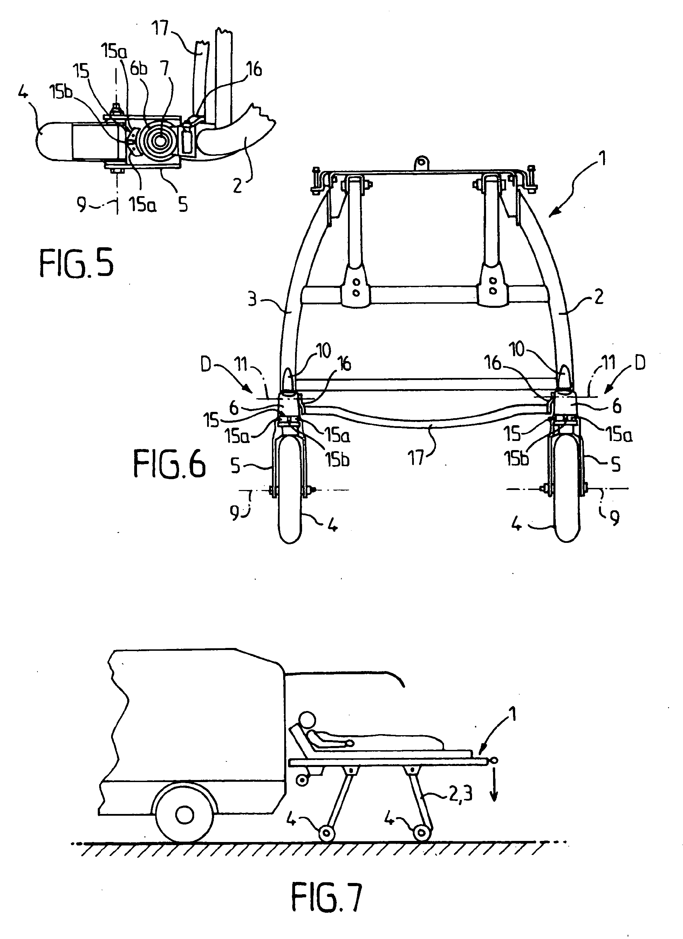

Les figures 2 à 5 permettent d'illustrer plus en détail le dispositif selon l'invention.

L'extrémité inférieure de la jambe 2 comporte un support 6 généralement obtenu par moulage et rapporté sur le reste de la jambe 2 issu d'un tube profilé.

Le support 6 comporte une partie supérieure 6a (Fig. 3 et 4) prévue pour être solidarisée à la jambe 2 et une partie inférieure 6b pour recevoir la chape 5.

La partie inférieure 6b comporte un orifice d'axe vertical 7 permettant de monter la chape 5 à l'aide d'un écrou 8.

La chape 5 comporte un palier interne permettant à, sa partie inférieure 5a de pivoter par rapport à sa partie supérieure 5b montée fixe sous le support 6. Le palier interne ne sera pas décrit plus en détail car ce type de disposition est connu.

La partie inférieure 5a de la chape 5 comporte au moins une branche supportée par une roue 4 par l'intermédiaire d'un arbre d'axe horizontal 9. L'axe 9 est déporté par rapport à l'axe vertical 7 et n'est pas sécant avec celui-ci.

Une commande de blocage 10 est montée rotative autour d'un axe horizontal 11 par rapport au support 6. La commande 10 comporte une partie supérieure 10a (Fig. 8 et 9), une partie centrale 10b au voisinage de l'axe 11 et une partie inférieure ou doigt 10c. Le doigt 10c est constitué d'un profilé en T s'étendant sensiblement verticalement. Le plan de symétrie d'une section du profil en T est orthogonal à l'axe 11. On appellera nervure active 12 l'âme du profil en T s'étendant dans le plan de symétrie du profil, les deux ailes du T étant appelées branches secondaires 13. La partie centrale 10b est sensiblement cylindrique mais comporte deux méplats M1 et M2 formant un dièdre dont les normales des faces sont orthogonales à l'axe 11.

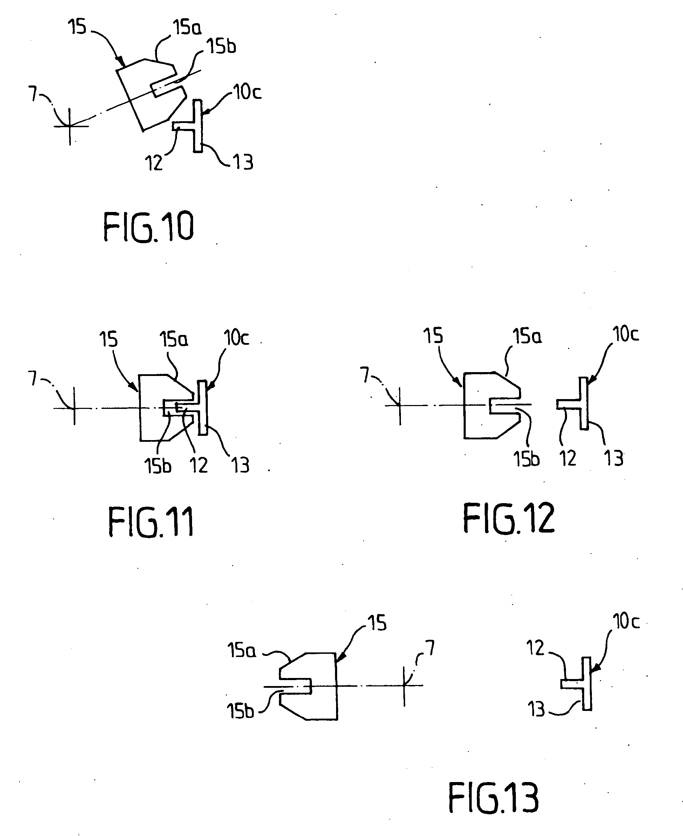

Une lame ressort 14 (Fig. 8 et 9) est fixée sur le support 6 par une première extrémité. Une seconde extrémité de la lame ressort 14 est tangente à la partie centrale 10b de la commande 10 et exerce un effort quasi-permanent sur celle-ci. Le support 6 étant solidaire de la jambe 2 ou 3, la lame 14 est ainsi solidaire de la jambe. Un bloqueur 15 est fixé au sommet de la partie 5a de la chape 5. La section du bloqueur 15 par un plan horizontal (voir Fig. 10-13) est sensiblement en trapèze isocèle dont le plan vertical de symétrie contient l'axe de rotation 7. La partie extérieure du bloqueur 15, opposée à l'axe 7, comporte deux plans inclinés 15a de part et d'autre d'une encoche 15b située en partie centrale.

Chacune des commandes 10 des dispositifs D situés sur les jambes 2 et 3 comporte un levier 16 qui s'étend vers le bas. Les extrémités inférieures des leviers 16 sont reliées par une tringle comportant une partie incurvée formant pédale 17 (Fig 2, 6, 8 et 9). La pédale 17 se trouve donc en dessous des axes 11.

En fonctionnement, l'action de la lame 14 sur l'un ou l'autre des méplats M1 et M2 maintient la commande 10 en position de blocage ou de déblocage.

Lorsque la pédale 17 est repoussée du pied par l'opérateur, les commandes 10 pivotent autour de leur axe 11 dans le sens anti-horaire jusqu'à être maintenues en position par les lames 14 exerçant un effort sur les méplats M1 (Fig. 9).

Dans cette position les nervures actives 12 sont écartées des chapes 5 et ne peuvent venir en contact avec les bloqueurs 15 quelle que soit l'orientation de la chape 5. Les chapes 5 sont alors libres de pivoter autour de l'axe 7 (Fig. 12 et 13).

Lorsque l'opérateur désire bloquer les roues, il agit sur la pédale 17 pour la faire basculer vers le bas de la position de Fig. 9 à celle de Fig. 8. Les doigts 10c des commandes 10 pivotent dans le sens d'horloge autour de l'axe 11, selon Fig. 9. Les lames 14 coopèrent alors avec les méplats M2 et maintiennent les nervures actives 12 en position sensiblement verticale.

Lorsque les chapes 5 pivotent (Fig. 10), de telle manière que les bloqueurs 15 entrent en contact par un de leurs pans inclinés 15a avec les nervures actives 12, le pan incliné 15a repousse la nervure active 12. Si les mouvements de votation des chapes 5 sont suffisants pour amener les encoches 15b en face des nervures actives 12, l'action élastique des lames 14 provoque l'entrée des nervures actives 12 dans les encoches 15b (Fig. 11). Le pivotement des chapes 5 est alors bloqué. L'action des lames 14 sur les méplats M2 empêche la sortie des nervures actives 12 des encoches 15b.

De préférence, les roues 4 sont bloquées en position 0°, c'est à dire dans l'axe du chariot. L'opérateur peut par exemple exercer un effort vers le bas sur les poignées du chariot pour engager le chariot dans un véhicule.

Lorsque l'utilisateur désire débloquer les roues, il lui suffit de pousser la pédale 17 pour faire pivoter les doigts 10c vers l'avant et provoquer la sortie des nervures actives 12 des encoches 15b. Les lames 14 cessent d'agir sur les méplats M2 mais exercent sur les méplats M1 des efforts qui maintiennent les commandes 10 à l'écart des bloqueurs 15.

On notera que, lorsque la chape 5 est bloquée (voir Fig. 4), la ligne moyenne L_{M} de la jambe 2, 3, à l'extrémité inférieure de la jambe 2, 3, passe derrière l'axe de la roue 4 par rapport au sens de déplacement principal du chariot 1.

## Revendications

1. Dispositif (D) de blocage/libération d'une chape de roue orientable (5) dans laquelle est installée une roue (4), d'axe (9) sensiblement horizontal, la chape (5) étant montée de manière pivotante autour d'un axe (7) sensiblement vertical à l'extrémité inférieure d'une jambe (2, 3) participant au support d'un appareil, le dispositif (D) comportant un moyen d'indexation permettant de bloquer la chape (5) par rapport à la jambe (2, 3) selon une orientation prédéfinie, **caractérisé en ce que** le moyen d'indexation comprend une commande de blocage (10) montée sur la jambe (2, 3) de manière à pouvoir pivoter selon un axe (11) sensiblement horizontal, la commande de blocage (10) comprenant une première extrémité (10a) formant levier et une seconde extrémité (10c) pourvue d'un doigt coopérant avec un bloqueur (15) solidaire de la chape (5), un moyen de positionnement (14, M1, M2) assurant le maintien de la commande de blocage dans une première et une seconde position respectivement activant et désactivant le moyen d'indexation.

2. Dispositif (D) selon la revendication 1, **caractérisé en ce que** le bloqueur (15) comporte une gorge (15b), destinée à accueillir le doigt (10c), encadrée par des pans inclinés (15a).

3. Dispositif (D) selon la revendication 1 ou 2, **caractérisé en ce que** le moyen de positionnement comprend une lame élastique (14) solidaire de la jambe (2, 3) coopérant avec au moins une surface plane (M1, M2) appartenant à la commande de blocage (10) et dont la normale est orthogonale à l'axe (11) de rotation de la commande blocage (10).

4. Chariot brancard (1) comportant un cadre supporté par des jambes, pour recevoir un brancard, **caractérisé en ce qu'**au moins une des iambes arrière est équipée d'un dispositif (D) selon l'une des revendications précédentes.

5. Chariot brancard (1) selon la revendication 4, **caractérisé en ce que** ses deux jambes arrière (2, 3) sont équipées d'un dispositif (D) selon l'une des revendications 1 à 3 et **en ce qu'**une pédale (17) relie les commandes (10) des deux dispositifs (D).

6. Chariot brancard (1) selon la revendication 4 ou 5, **caractérisé en ce que**, lorsque la chape (5) est bloquée, la ligne moyenne (L_{M}) de la jambe (2, 3), à l'extrémité inférieure de la jambe (2, 3), passe derrière l'axe de la roue (4) par rapport au sens de déplacement principal du chariot (1).

## Claims

1. Device (D) for locking/releasing a caster-wheel fork (5) in which a wheel (4) is installed, with a substantially horizontal axis (9), the fork (5) being mounted so as to pivot about a substantially vertical axis (7) at the bottom end of a leg (2, 3) participating in the support of an apparatus, the device (D) comprising an indexing means making it possible to lock the fork (5) relative to the leg (2, 3) in a predefined orientation, **characterized in that** the indexation means comprises a locking control (10) mounted on the leg (2, 3) so as to be able to pivot on a substantially horizontal axis (11), the locking control (10) comprising a first end (10a) forming a lever and a second end (10c) provided with a finger interacting with a locking element (15) secured to the fork (5), a positioning means (14, M1, M2) keeping the locking control in a first and a second position respectively activating and deactivating the indexation means.

2. Device (D) according to Claim 1, **characterized in that** the locking element (15) comprises a groove (15b) designed to receive the finger (10c) surrounded by inclined faces (15a).

3. Device (D) according to Claim 1 or 2, **characterized in that** the positioning means comprises an elastic bar (14) secured to the leg (2, 3) interacting with at least one flat surface (M1, M2) belonging to the locking control (10) and of which the normal is orthogonal to the axis (11) of rotation of the locking control (10).

4. Stretcher trolley (1) comprising a frame supported by legs, for receiving a stretcher, **characterized in that** at least one of the rear legs is fitted with a device (D) according to one of the preceding claims.

5. Stretcher trolley (1) according to Claim 4, **characterized in that** its two rear legs (2, 3) are fitted with a device (D) according to one of Claims 1 to 3, and **in that** a pedal (17) connects the controls (10) of the two devices (D).

6. Stretcher trolley (1) according to Claim 4 or 5, **characterized in that**, when the fork (5) is locked, the centre line (L_{M}) of the leg (2, 3), at the bottom end of the leg (2, 3), passes behind the axis of the wheel (4) relative to the main direction of movement of the trolley (1).

## Patentansprüche

1. Vorrichtung (D) zum Sperren/Freigeben einer lenkbaren Radgabel (5), in welcher ein Rad (4) mit einer im Wesentlichen horizontalen Achse (9) angebracht ist, wobei die Gabel (5) schwenkbar um eine im Wesentlichen vertikale Achse (7) am unteren Ende eines dem Stützen eines Geräts dienenden Beines (2, 3) angebracht ist, wobei die Vorrichtung (D) eine Indexiereinrichtung aufweist, welche es ermöglicht, die Radgabel (5) in Bezug auf das Bein (2, 3) in einer vordefinierten Richtung zu sperren, **dadurch gekennzeichnet, dass** die Indexiereinrichtung eine Sperrbetätigungseinrichtung (10) aufweist, welche an dem Bein (2, 3) um eine im Wesentlichen horizontale Achse (11) schwenkbar angebracht ist, wobei die Sperrbetätigungseinrichtung (10) ein erstes Ende (10a), das einen Hebel bildet, und ein zweites Ende (10c) aufweist, das mit einem Finger versehen ist, der mit einer fest mit der Radgabel (5) verbundenen Sperreinrichtung (15) zusammenwirkt, wobei eine Positionierungseinrichtung (14, M1, M2) das Halten der Sperrbetätigungseinrichtung in einer ersten und einer zweiten Position gewährleistet, in welcher die Indexiereinrichtung aktiviert bzw. deaktiviert ist.

2. Vorrichtung (D) nach Anspruch 1, **dadurch gekennzeichnet, dass** die Sperreinrichtung (15) eine zum Aufnehmen des Fingers (10c) vorgesehene Nut (15b) aufweist, die von schrägen Seitenflächen (15a) umgeben ist.

3. Vorrichtung (D) nach Anspruch 1 oder 2, **dadurch gekennzeichnet, dass** die Positionierungseinrichtung einen fest mit dem Bein (2, 3) verbundenen elastischen Streifen (14) aufweist, der mit mindestens einer ebenen Fläche (M1, M2) der Sperrbetätigungseinrichtung (10) zusammenwirkt und deren Senkrechte orthogonal zur Drehachse (11) der Sperrbetätigungseinrichtung (10) verläuft.

4. Fahrbare Krankentrage (1) mit einem von Beinen gestützten Rahmen zum Aufnehmen einer Krankentrage, **dadurch gekennzeichnet, dass** mindestens eines der hinteren Beine mit einer Vorrichtung (D) nach einem der vorhergehenden Ansprüche versehen ist.

5. Fahrbare Krankentrage (1) nach Anspruch 4, **dadurch gekennzeichnet, dass** ihre beiden hinteren Beine (2, 3) mit einer Vorrichtung (D) nach einem der Ansprüche 1 bis 3 versehen sind, und dass ein Pedal (17) die Betätigungseinrichtungen (10) der beiden Vorrichtungen (D) verbindet.

6. Fahrbare Krankentrage (1) nach Anspruch 4 oder 5, **dadurch gekennzeichnet, dass**, im gesperrten Zustand der Radgabel (5), die Mittellinie (L_{M}) des Beins (2, 3) am unteren Ende des Beines (2, 3) in Bezug auf die Hauptbewegung des Wagens (1) hinter Achse des Rades (4) verläuft.
